# EUROPEAN PATENT APPLICATION

(11) **EP 4 287 044 A1**
(43) Date of publication of application: **06.12.2023**
(21) Application number: 23152442.2
(22) Date of filing: 19.01.2023
(51) Int. Cl.: G06F 16/955, H04L 9/40

(54) **COMPUTER-READABLE RECORDING MEDIUM STORING DOMAIN DETECTION PROGRAM, DOMAIN DETECTION METHOD, AND INFORMATION PROCESSING DEVICE**

(30) Priority: 31.05.2022 JP 2022089029
(71) Applicant: FUJITSU LIMITED, Kawasaki-shi, Kanagawa 211-8588 (JP)
(72) Inventor: Taniguchi, Tsuyoshi, Kawasaki-shi, Kanagawa, 211-8588 (JP)
(74) Representative: Hoffmann Eitle

(57) **Abstract**

A domain detection program comprising instructions which, when executed by a computer, cause the computer to execute processing including: generating an anomalous character string similar to a predetermined domain name; and detecting a response that indicates association between domain information whose subdomain is the generated anomalous character string and an address based on response history information that indicates association between domain information and an address by a management server that manages the domain information.

## Description

### FIELD

The embodiments discussed herein are a domain detection program, a domain detection method, and an information processing device.

### BACKGROUND

In recent years, phishing scams have been causing credential theft by methods such as typosquatting targeting brand domains. When login information of sites and credit card information are stolen, victims will suffer real financial damage, so information regarding phishing sites has been being continuously shared as measures against crime.

As typosquatting detection, Microsoft (registered trademark) has proposed Strider Typo-Patrol. Strider Typo-Patrol automatically scans typo domains of brand domains and scrutinizes Hypertext Transfer Protocol (HTTP) logs.

Existing techniques have also been proposed for level squatting detection methods. Level squatting exploits the fact that subdomains are free to operate on any character string without any cost or restrictions. For example, in level squatting, a character string that looks like a fully qualified domain name (FQDN) of a brand domain is operated as a subdomain of a domain that has nothing to do with the brand.

In the existing techniques for the level squatting detection methods, "google.com.example.com" is given as an example. "google.com" is a domain of Google (registered trademark), but "google.com" is a subdomain in "google.com.example.com". Then, "example.com", which is higher than "google.com", is a domain unrelated to Google. Similarly, the subdomain of "fujitsu.com.example.com" related to Fujitsu (registered trademark) or the like can be operated without restrictions.

Compared to typosquatting, the subdomain part is the character string of the brand domain itself. For this reason, there are cases where users who are deceived by a display and access a site in a case where only a first half of a uniform resource locator (URL) is displayed because a display area of a smartphone or the like is narrow. In an existing technique for a level squatting detection method, subdomains containing brand domains are detected from a forward lookup history of name resolution based on a passive domain name system (DNS).

Examples of the related art include: [NPL 1] Wang, Yi-Min, et al. "Stricter Typo-Patro/: Discovery and Analysis of Systematic Typo-Squatting." SRUTI 6.31-36 (2006): 2-2.; and [NPL 2] Du, Kun, et al. "TL; DR hazard: A comprehensive study of levelsquatting scams." International Conference on Security and Privacy in Communication Systems. Springer, Cham, 2019. are disclosed as related art.

### SUMMARY

### TECHNICAL PROBLEM

In recent phishing sites, cases of malicious use of character strings similar to a target URL in the subdomain part of a URL for guiding the victims have become noticeable.

For example, on July 27, 2021, Council of Anti-Phishing Japan (https://www.antiphishing.jp/), which continuously raises awareness about phishing scams that need attention in Japan, called attention to the Rakuten Card (registered trademark) as emergency information. This alert is about cases where "www.rakuton-jp.●●●●/" and "www.rakotem-card.●●●●/" have been exploited as URLs to be directed to phishing sites against the legitimate "rakuten.co.jp".

That is, similar character strings such as "rakuton" and "rakotem" have been exploited in the subdomain part against "rakuten". In the case where such similar character strings are exploited in domains, the exploitation can be detected by checking zone files of WHOIS or a top-level domain (TLD), but subdomains are not registered in these sites and are therefore unable to be detected.

With the existing technique of detecting a case of abusing a legitimate URL in a subdomain by utilizing the passive DNS, which is a name resolution history, detection will be evaded if an anomalous URL is exploited in the subdomain.

Moreover, in the case of exploiting an anomalous URL in the subdomain part, it is possible to abuse a top-level domain part that could not be abused in the domain part because a domain owner can operate a character string that the domain owner likes for the subdomain. For example, anomalous URLs such as "rakuten.co.ip (change jp to ip)" and "rakuten.co.jjp (change co.jp to co.jjp)" can be exploited, and it becomes more and more difficult to detect such exploitation by the existing techniques.

In one aspect, an object is to provide a domain detection program, a domain detection method, and an information processing device capable of improving detection accuracy of domains targeted for abuse.

### SOLUTION TO PROBLEM

According to an aspect of the embodiments, there is provided a domain detection program comprising instructions which, when executed by a computer, cause the computer to execute processing including: generating an anomalous character string similar to a predetermined domain name; and detecting a response that indicates association between domain information whose subdomain is the generated anomalous character string and an address based on response history information that indicates association between domain information and an address by a management server that manages the domain information.

### ADVANTAGEOUS EFFECTS OF INVENTION

It is possible to improve detection accuracy of domains targeted for abuse.

### BRIEF DESCRIPTION OF DRAWINGS

FIG. 1 is a block diagram illustrating a functional configuration example of an information processing device according to an embodiment;
FIG. 2 is a flowchart illustrating an example of anomalous character string generation processing;
FIG. 3 is a flowchart illustrating an example of pseudo top-level domain (TLD) pattern generation processing;
FIG. 4 is an explanatory table for describing an example of a pseudo TLD pattern;
FIG. 5 is an explanatory table for describing an example of anomalous character string data;
FIG. 6 is a flowchart illustrating an example of most recent response detection processing;
FIG. 7 is an explanatory table for describing an example of most recent response subdomain data;
FIG. 8 is a flowchart illustrating an example of new subdomain extraction processing;
FIG. 9 is a flowchart illustrating an example of malignancy determination processing;
FIG. 10 is an explanatory table for describing an example of candidate unidentified subdomain data;
FIG. 11 is a flowchart illustrating an example of a phishing site determination processing;
FIG. 12 is an explanatory table for describing an example of unidentified phishing site uniform resource locator (URL) data; and
FIG. 13 is an explanatory diagram for describing an example of a computer configuration.

### DESCRIPTION OF EMBODIMENTS

Hereinafter, a domain detection program, a domain detection method, and an information processing device according to embodiments will be described with reference to the drawings. Configurations having the same functions in the embodiments are denoted by the same reference signs, and redundant description will be omitted. Note that the domain detection program, the domain detection method, and the information processing device described in the following embodiments are merely examples, and do not limit the embodiments. Furthermore, each of the following embodiments may be appropriately combined unless otherwise contradicted.

An information processing device according to an embodiment detects domain information targeted for abuse, using exploitation of anomalous top-level domains of subdomain parts (domain names arbitrarily set before a second-level domain (SLD)) that have not been seen in the past against itself, using a passive domain name system (DNS), which is a name resolution history. Note that, in the following description, it is assumed that "domain information" refers not only to the subdomain part (domain part other than the top-level domain (TLD)) but also to a fully qualified domain name (FQDN) in which all of layers such as a subdomain name and a host name are specified without omission in order from the TLD.

For example, regarding exploitation of anomalous uniform resource locators (URLs) in subdomain parts, it has been revealed, by monitoring and tracking actual phishing sites, that certain patterns are discarded immediately but some specific patterns are used for several purposes inconspicuously for a certain period of time.

Therefore, since there is a possibility that anomalous patterns that have been confirmed to have been abused on sharing sites of URLs of phishing sites or the like will be used for several purposes for phishing sites later, anomalous character strings are collected using anomalous top-level domains as keys.

In typosquatting that abuses domains, which has been seen in existing phishing attacks, only second level domains can be abused. For example, in the case of "amazon.com", which is often abused, the "amazon" part is changed to "amazom" or "amezon" and registered. However, registered content will be managed under the selected top-level domain (".com" in this case) due to the DNS's mechanism.

Meanwhile, for subdomains, the domain owner can basically operate any character string that the domain owner likes without restrictions of a registrar, so even ".com" that is the top-level part can be abused, and abuse like ".conn" is possible. In other words, if such a pattern can be detected in the subdomain part, the pattern can be detected as an abused anomalous character string.

Moreover, in the operation of phishing sites, a specific Internet Protocol (IP) address is sometimes used for several purposes, and a series of phishing attacks in which the specific IP address is associated with an anomalous subdomain imitating a new phishing target is detected. The information processing device according to the embodiment extracts the IP address associated with domain information including the subdomain part that is newly confirmed to be abused, and uses this extracted IP address to detect domain information targeted for abuse.

Furthermore, in an existing approach, malignancy of a domain is determined from WHOIS as a domain name registration information search service or from a zone file of a top-level domain, or a domain that has been abused is extracted from past huge name resolution histories, and analyzed. In contrast, the information processing device according to the embodiment monitors the name resolution of the domain information including the anomalous subdomain and detects the most recent name resolution, thereby implementing direct and prompt detection. Therefore, in some cases, the information processing device according to the embodiment can detect a phishing site before the site is ready and an email for a phishing attack is sent, and can detect the phishing site before the site is shared as threat information.

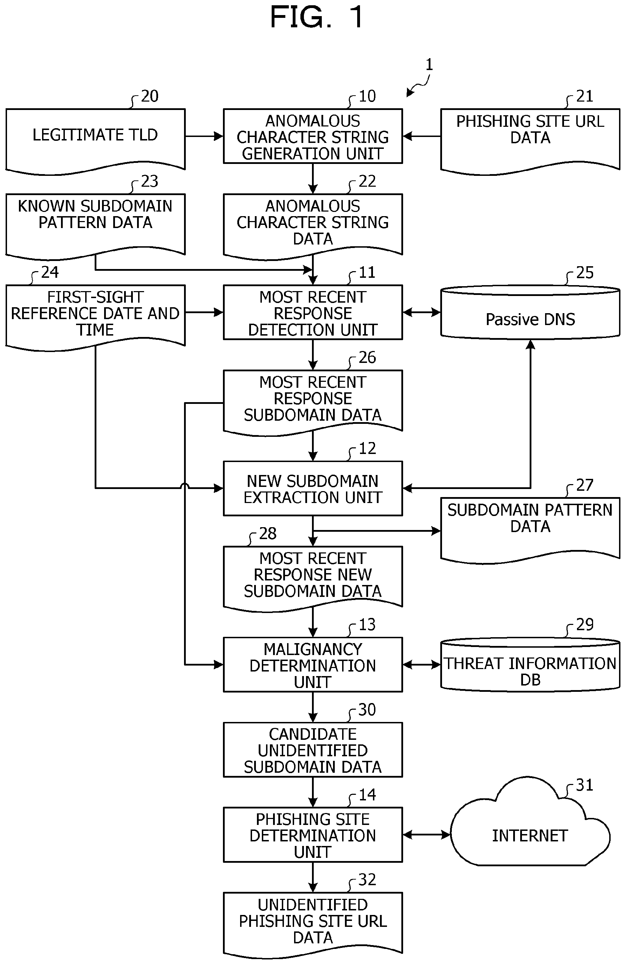

FIG. 1 is a block diagram illustrating a functional configuration example of an information processing device according to an embodiment. An information processing device 1 according to the embodiment is, for example, a computer such as a personal computer (PC). As illustrated in FIG. 1, the information processing device 1 has an anomalous character string generation unit 10, a most recent response detection unit 11, a new subdomain extraction unit 12, a malignancy determination unit 13, and a phishing site determination unit 14.

The anomalous character string generation unit 10 is a processing unit that performs anomalous character string generation processing of receiving a legitimate TLD 20 and phishing site URL data 21 as inputs, and generating an anomalous character string that can be abused by a phishing site, that is, an anomalous character string similar to a domain name in the legitimate TLD 20. The anomalous character string generation unit 10 outputs anomalous character string data 22 of the generated anomalous character string.

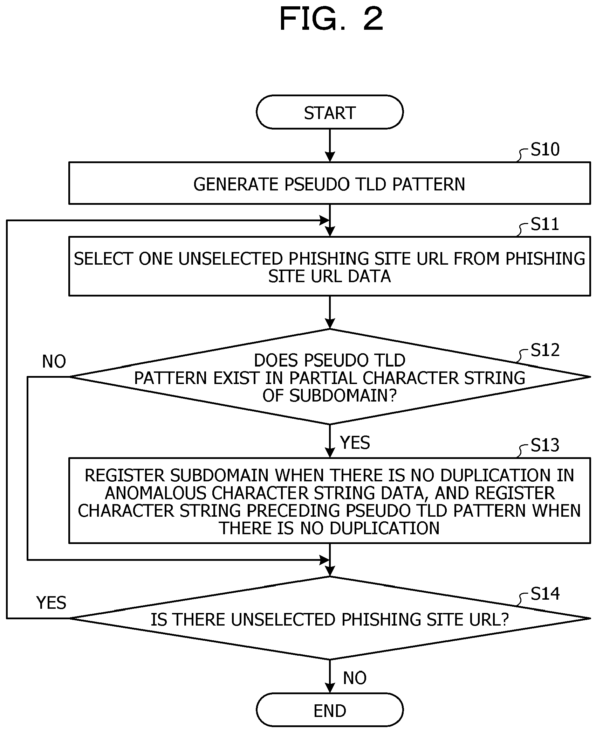

FIG. 2 is a flowchart illustrating an example of the anomalous character string generation processing. As illustrated in FIG. 2, when the anomalous character string generation processing is started, the anomalous character string generation unit 10 generates a pseudo TLD pattern (S10).

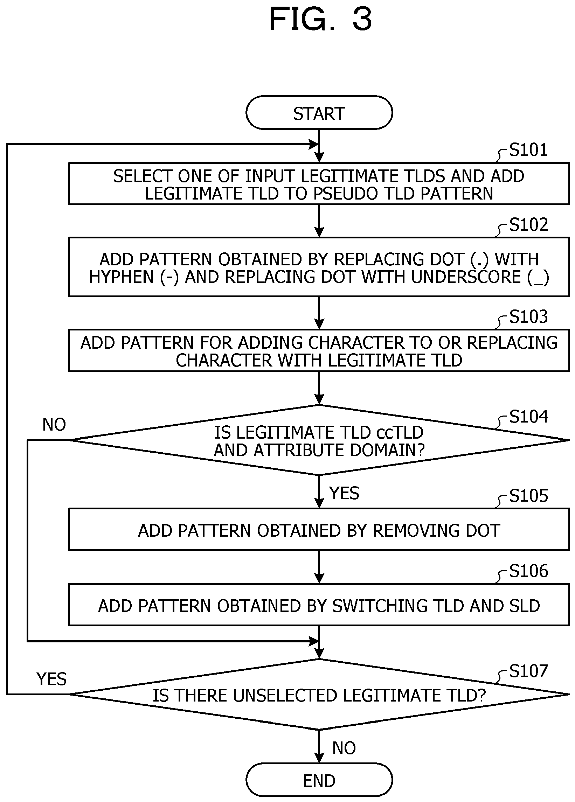

FIG. 3 is a flowchart illustrating an example of pseudo TLD pattern generation processing. As illustrated in FIG. 3, when the pseudo TLD pattern generation processing (S10) is started, the anomalous character string generation unit 10 selects one of the input legitimate TLDs 20 and adds the legitimate TLD 20 to a pseudo TLD pattern (S101).

Next, the anomalous character string generation unit 10 adds a pattern obtained by replacing a dot (.) with a hyphen (-) and replacing the dot with an underscore (_) in the selected legitimate TLD 20 to the pseudo TLD pattern (S102). For example, the anomalous character string generation unit 10 adds "co-jp" and "co_jp" for "co.jp".

Next, the anomalous character string generation unit 10 adds a pattern for adding one or more characters to the selected legitimate TLD 20 or a pattern for replacing one or more characters with the pseudo TLD pattern (S103). For example, the anomalous character string generation unit 10 adds "co.jpp" obtained by adding "p" and "co.ip" obtained by replacing "j" with "i" for "co.jp".

Next, the anomalous character string generation unit 10 determines whether the selected legitimate TLD 20 is a ccTLD and is an attribute domain (S104). In a case where the determination in S104 is affirmative (Yes), the anomalous character string generation unit 10 adds a pattern obtained by removing the dot from the selected legitimate TLD 20 to the pseudo TLD pattern (S105). For example, the anomalous character string generation unit 10 adds "cojp" for "co.jp".

Next, the anomalous character string generation unit 10 adds a pattern obtained by switching the top-level domain (TLD) and the second-level domain (SLD) for the selected legitimate TLD 20 to the pseudo TLD pattern (S106). For example, the anomalous character string generation unit 10 adds "jp.co" for "co.jp".

In a case where the determination in S104 is negative (No), that is, in a case where the selected legitimate TLD 20 is not a ccTLD or an attribute domain, the anomalous character string generation unit 10 skips the processing of S105 and S106.

Next, the anomalous character string generation unit 10 determines whether there is an unselected legitimate TLD 20 (S107), and in a case where there is an unselected legitimate TLD 20 (S107: Yes), the processing returns to S101. In a case where there is no unselected legitimate TLD 20 (S107: No), the anomalous character string generation unit 10 terminates the processing. In this way, the anomalous character string generation unit 10 repeats the series of processing (S101 to S107) until there are no more unselected legitimate TLDs 20.

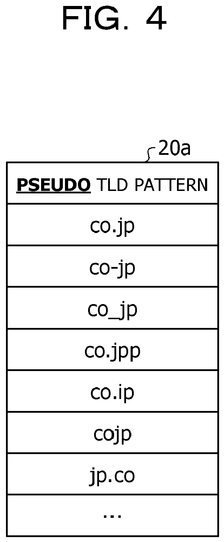

FIG. 4 is an explanatory table for describing examples of the pseudo TLD pattern. As illustrated in FIG. 4, the pseudo TLD pattern 20a includes a plurality of patterns obtained by the anomalous character string generation unit 10 executing a plurality of replacement patterns, such as replacing one or more characters contained in the legitimate TLD 20 with one or a plurality of other characters, or removing one or a plurality of characters contained in the legitimate TLD 20.

Returning to FIG. 2, following the pseudo TLD pattern generation processing (S10), the anomalous character string generation unit 10 selects one unselected phishing site URL from the input phishing site URL data 21 (S11). Here, the phishing site URL data 21 uses a URL list or the like downloaded from an information sharing site specializing in phishing such as PhishTank (https://phishtank.org/).

Next, the anomalous character string generation unit 10 determines whether the pseudo TLD pattern 20a exists in a partial character string of the subdomain of the selected phishing site URL (S12). In a case where the pseudo TLD pattern 20a exists (S12: Yes), the anomalous character string generation unit 10 registers the subdomain part of the phishing site URL in the anomalous character string data 22 when there is no duplication in the anomalous character string data 22, and also registers the character string preceding the pseudo TLD pattern 20a in the anomalous character string data 22 when there is no duplication (S13). In a case where the pseudo TLD pattern 20a does not exist (S12: No), the anomalous character string generation unit 10 skips the processing of S13.

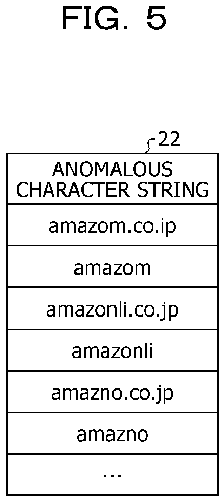

FIG. 5 is an explanatory table for describing an example of the anomalous character string data 22. As illustrated in FIG. 5, when the phishing site URL is "amazom.co.ip", the pattern "co.ip" exists as a partial character string of the subdomain, so the subdomain part is registered in the anomalous character string data 22. Furthermore, since there is a pattern that abuses only the "amazom" part, the pattern is registered in the anomalous character string data 22. The same is similarly true for "amazonli.co.jp" and "amazno.co.jp".

Returning to FIG. 2, following S13, the anomalous character string generation unit 10 determines whether there is an unselected phishing site URL (S14), and returns the processing to S11 in a case where there is an unselected phishing site URL (S14: Yes). In a case where there is no unselected phishing site URL (S14: No), the anomalous character string generation unit 10 terminates the processing. In this way, the anomalous character string generation unit 10 repeats the series of processing (S11 to S14) until there are no more unselected phishing site URLs.

Returning to FIG. 1, the most recent response detection unit 11 is a processing unit that performs most recent response detection processing of receiving the anomalous character string data 22, known subdomain data 23, and first-sight reference date and time 24 as inputs, and outputting most recent response subdomain data 26 by referring to a passive DNS 25. Specifically, the most recent response detection unit 11 refers to the passive DNS 25 and acquires response history information indicating association between domain information and an address by an authoritative DNS server that manages the domain information. Next, the most recent response detection unit 11 detects, from the acquired history information, a response indicating association between an address and the domain information whose subdomain is the anomalous character string included in the anomalous character string data 22, and outputs the most recent response subdomain data 26 as a detection result.

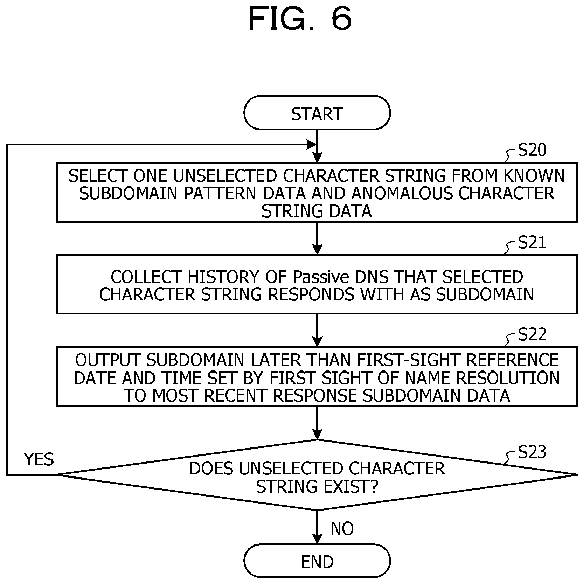

FIG. 6 is a flowchart illustrating an example of the most recent response detection processing. As illustrated in FIG. 6, when the most recent response detection processing is started, the most recent response detection unit 11 selects one unselected character string from the known subdomain data 23 and the anomalous character string data 22 (S20).

Next, the most recent response detection unit 11 collects the history of the passive DNS 25 that the selected character string responds with as a subdomain (S21).

A basic concept of the passive DNS 25 is not to transfer a zone file, but to capture a DNS packet returned by authoritative DNS server and extract a resource record. In other words, the passive DNS 25 is an example of a collection server that monitors communication of the DNS server, collects the response history related to association between the domain information and the IP address, and manages them as a database.

For example, in a case of using DNSDB, which is a passive DNS service provided by DomainTools (formerly Farsight Security), the most recent response detection unit 11 can collect the history of the passive DNS 25 by a provided application programming interface (API) (URL of Ver 1 API description https://docs.farsightsecurity.com/dnsdb/dnsdb-api/).

As an example, the most recent response detection unit 11 can collect the name resolution history in which the selected character string is abused in subdomains by using a wildcard function of this API. For example, when issuing a query such as "amazom.co.ip.^{∗}", the most recent response detection unit 11 can look up the name resolution like "amazom.co.ip.SLD.TLD" (SLD is the second-level domain and TLD is the top-level domain).

Next, the most recent response detection unit 11 outputs the subdomain later than the first-sight reference date and time 24 set by first sight of the name resolution to the most recent response subdomain data 26 (S22).

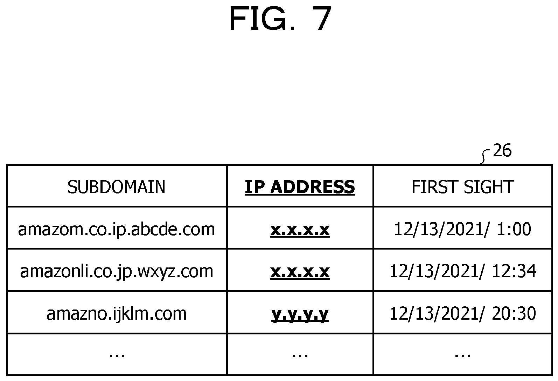

FIG. 7 is an explanatory table for describing an example of the most recent response subdomain data 26. Note that, in the example of FIG. 7, the first-sight reference date and time 24 is 00:00, December 13, 2021. As illustrated in FIG. 7, as the response indicating association between an address and the domain information whose subdomain is the anomalous character string included in the anomalous character string data 22, one later than the first-sight reference date and time 24 is stored in the most recent response subdomain data 26.

Specifically, the most recent response subdomain data 26 stores "amazom.co.ip.abcde.com", which has started responding to the IP address "x.x.x.x" at 1:00 on December 13, 2021. Furthermore, the most recent response subdomain data 26 stores "amazonli.co.jp.wxyz.com", which has started responding to the IP address "x.x.x.x" at 12:34 on December 13, 2021. Furthermore, the most recent response subdomain data 26 stores "amazno.ijklm.com", which has started responding to the IP address "y.y.y.y" at 20:30 on December 13, 2021.

Returning to FIG. 6, the most recent response detection unit 11 determines whether an unselected character string exists from the known subdomain data 23 and the anomalous character string data 22 (S23), and returns the processing to S20 in a case where there is an unselected character string (S23: Yes). In a case where there is no unselected character string (S23: No), the most recent response detection unit 11 terminates the processing. In this way, the most recent response detection unit 11 repeats the series of processing (S20 to S23) until there are no more unselected character strings.

Returning to FIG. 1, the new subdomain extraction unit 12 is a processing unit that performs new subdomain extraction processing of receiving the first-sight reference date and time 24 and the most recent response subdomain data 26 as inputs, and outputs subdomain pattern data 27 and most recent response new subdomain data 28 by referring to the passive DNS 25. Specifically, the new subdomain extraction unit 12 extracts a response indicating association between an address and domain information different from the domain information associated with the address of the most recent response subdomain data 26 from the history information of the passive DNS 25 based on the address included in the most recent response subdomain data 26. Next, the new subdomain extraction unit 12 outputs the most recent response new subdomain data 28 as an extraction result.

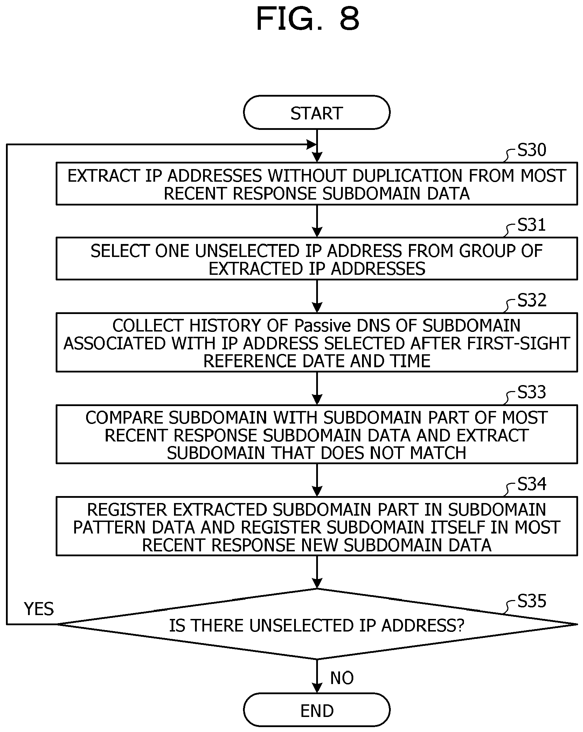

FIG. 8 is a flowchart illustrating an example of the new subdomain extraction processing. As illustrated in FIG. 8, when the new subdomain extraction processing is started, the new subdomain extraction unit 12 extracts IP addresses without duplication from the most recent response subdomain data 26 (S30).

Next, the new subdomain extraction unit 12 selects one unselected IP address from a group of the extracted IP addresses (S31). Next, the new subdomain extraction unit 12 collects the history of the passive DNS 25 of the subdomain associated with the IP address selected after the first-sight reference date and time 24 (S32).

Next, the new subdomain extraction unit 12 compares the subdomain associated with the IP address collected from the history of the passive DNS 25 with the subdomain part of the most recent response subdomain data 26, and extracts the subdomain that does not match (S33). In other words, the new subdomain extraction unit 12 extracts the response indicating association between an address and domain information different from the domain information associated with the address of the most recent response subdomain data 26 from the history information of the passive DNS 25.

Next, the new subdomain extraction unit 12 registers the extracted subdomain part in the subdomain pattern data 27 and the subdomain itself in the most recent response new subdomain data 28 (S34). Specifically, the new subdomain extraction unit 12 registers the domain information including the subdomain part extracted in a same data format as the anomalous character string data 22 (see FIG. 5) in the subdomain pattern data 27. Furthermore, the new subdomain extraction unit 12 registers the response indicating association between the domain information including the extracted subdomain and the address together with time information of first sight in a data format similar to the most recent response subdomain data 26 (see FIG. 7) in the most recent response new subdomain data 28.

Next, the new subdomain extraction unit 12 determines whether there is an unselected IP address in the group of the extracted IP addresses (S35), and returns the processing to S30 in a case where there is an unselected IP address (S35: Yes). In a case where there is no unselected IP address (S35: No), the new subdomain extraction unit 12 terminates the processing. In this way, the new subdomain extraction unit 12 repeats the series of processing (S30 to S35) until there are no more unselected IP addresses.

Here, the most recent response detection unit 11 inputs the subdomain pattern data 27 and the anomalous character string data 22 from the known subdomain data 23 at the time of the next detection so as to expand a search target range each time of detection.

Returning to FIG. 1, the malignancy determination unit 13 is a processing unit that performs malignancy determination processing of receiving the most recent response subdomain data 26 and the most recent response new subdomain data 28 as inputs, and outputting candidate unidentified subdomain data 30 by reference to a threat information DB 29.

Specifically, the malignancy determination unit 13 determines presence or absence of unauthorized use of domain information based on whether the domain information in the most recent response subdomain data 26 and the most recent response new subdomain data 28 is included in threat information related to cyberattacks stored in the threat information DB 29. Here, the threat information refers to cyber threat intelligence (CTI), which indicates attack information in which motives, objectives, characteristics, modus operand!, or the like of cyberattack attackers are organized. This threat information can be obtained by referring to the latest phishing site URL in PhishTank described above, or by using a URL scanner of VirusTotal
(https://www.virustotal.com/gui/home/upload).

Next, the malignancy determination unit 13 outputs candidate unidentified subdomain data 30 indicating domain information without unauthorized use in the threat information based on a determination result. In other words, the candidate unidentified subdomain data 30 includes an unidentified domain as a domain targeted for abuse although there is no threat information that corresponds to the unauthorized use of the domain (there is no actual harm from the unauthorized use of the domain).

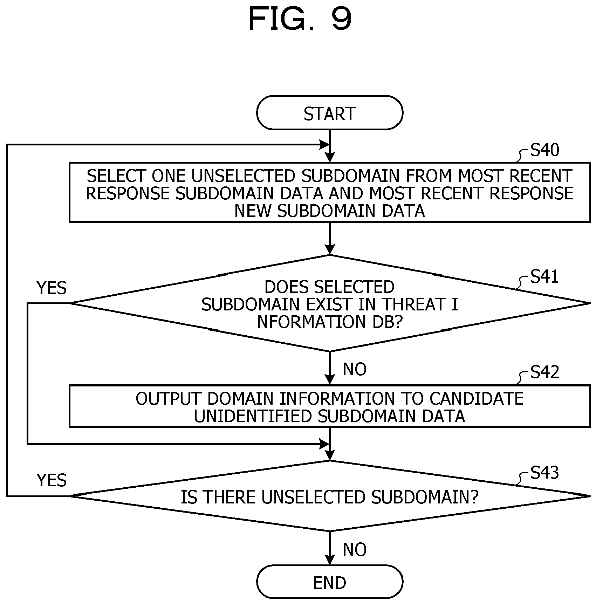

FIG. 9 is a flowchart illustrating an example of the malignancy determination processing. As illustrated in FIG. 9, when the malignancy determination processing is started, the malignancy determination unit 13 selects one unselected subdomain from the most recent response subdomain data 26 and the most recent response new subdomain data 28 (S40).

Next, the malignancy determination unit 13 refers to the threat information stored in the threat information DB 29 and determines whether the selected subdomain exists in the threat information DB 29 (S41). In a case where the selected subdomain does not exist in the threat information DB 29 (S41: No), the malignancy determination unit 13 outputs the domain information regarding the selected subdomain to the candidate unidentified subdomain data 30 (S42). In a case where the selected subdomain exists in the threat information DB 29 (S41: Yes), it means that unauthorized use of the subdomain has been detected by one of vendors, and the malignancy determination unit 13 skips the processing of S42.

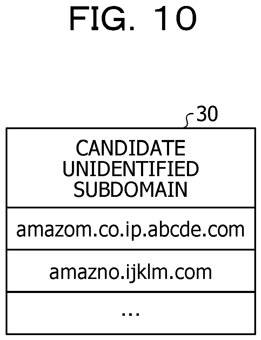

FIG. 10 is an explanatory table for describing an example of the candidate unidentified subdomain data 30. As illustrated in FIG. 10, the candidate unidentified subdomain data 30 stores the domain information including the subdomains such as "amazom.co.ip.abcde.com" and "amazno.ijklm.com".

Returning to FIG. 9, following S42, the malignancy determination unit 13 determines whether there is an unselected subdomain (S43), and returns the processing to S40 in a case where there is an unselected subdomain (S43: Yes). In a case where there is no unselected subdomain (S43: No), the malignancy determination unit 13 terminates the processing. In this way, the malignancy determination unit 13 repeats the series of processing (S40 to S43) until there are no more unselected subdomains.

Returning to FIG. 1, the phishing site determination unit 14 is a processing unit that performs phishing site determination processing of receiving the candidate unidentified subdomain data 30 as an input, and outputs unidentified phishing site URL data 32 by referring to Internet 31. Specifically, the phishing site determination unit 14 executes login using dummy information to an access destination based on the domain information determined to be free of unauthorized use based on the Internet 31. Next, the phishing site determination unit 14 outputs a determination result as to whether or not login is possible for each piece of the domain information included in the Internet 31 as the unidentified phishing site URL data 32.

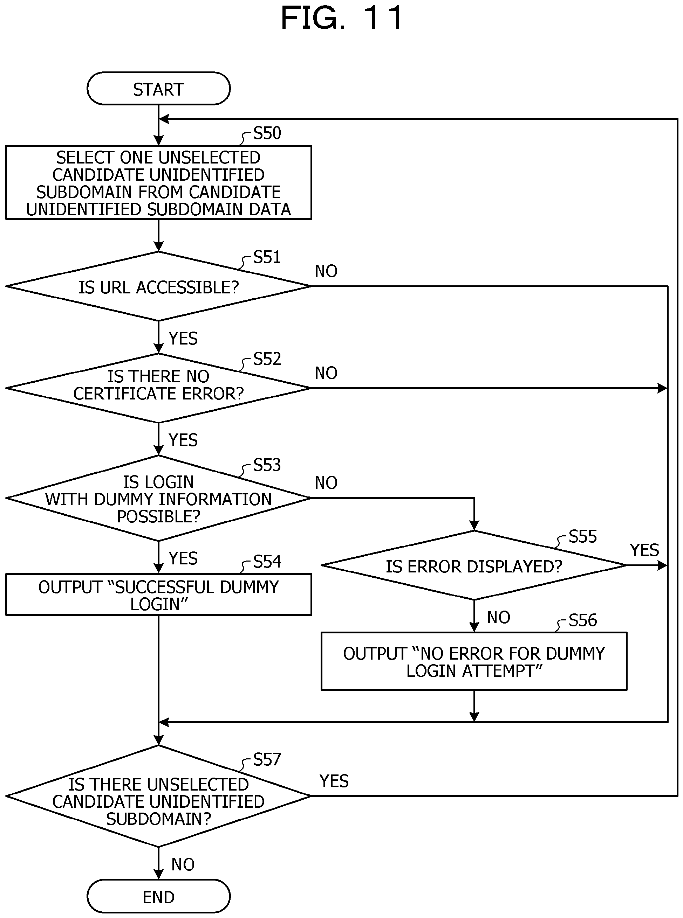

FIG. 11 is a flowchart illustrating an example of the phishing site determination processing. This phishing site determination processing is executed when one or more candidate unidentified subdomains are output from the malignancy determination unit 13.

As illustrated in FIG. 11, when the phishing site determination processing is started, the phishing site determination unit 14 selects one unselected candidate unidentified subdomain from the candidate unidentified subdomain data 30 (S50).

Next, the phishing site determination unit 14 checks whether the URL of the selected candidate unidentified subdomain is accessible via https (S51). For example, in a case where the candidate unidentified subdomain is "amazom.co.ip.abcde.com", the phishing site determination unit 14 attempts whether access to the URL "https://amazom.co.ip.abcde.com" is possible.

In a case where the access is not possible (S51: No), a phishing scam group may have only been operating for a short period of time, or the site has not yet been operated even though name resolution has been enabled. In any case, the phishing site itself is not confirmed, and thus the phishing site determination unit 14 skips the processing to S57 and the processing for the subdomain is terminated.

In a case where the access is possible (S51: Yes), the phishing site determination unit 14 proceeds to the next conditional branch (S52). In S52, the phishing site determination unit 14 checks whether there is a certificate error.

In a case where a certificate error occurs (S52: No), the phishing site is suspicious at a browser level, so the phishing site determination unit 14 skips the processing to S57 and the processing for the subdomain is terminated.

In a case where no certificate error occurs (S52: Yes), the phishing site determination unit 14 proceeds to the next conditional branch (S53). Next, since phishing sites these days are elaborately created, it is difficult to judge whether a site is a phishing site by its appearance. Meanwhile, in the case of phishing sites, since login information managed by a legitimate site is not able to be known, it is often possible to perform login by entering any character string in ID and password fields.

Therefore, the phishing site determination unit 14 attempts to log in to the access destination using dummy information (S53). Here, the dummy information is an ID such as an e-mail address, a password, and the like for which account information has not been created on any legitimate site, and may be, for example, randomly created ID, password, and the like. It will be confirmed that the site is a phishing site if the login is successful with the dummy information.

Therefore, in a case where the login with the dummy information is successful (S53: Yes), the phishing site determination unit 14 outputs "successful dummy login" to the unidentified phishing site URL data 32 related to the selected candidate unidentified subdomain (S54).

In a case where the login with the dummy information is unsuccessful (S53: No), the phishing site determination unit 14 checks whether an error is displayed from the access destination (S55).

In a case where an error is displayed (S55: Yes), it is not possible to distinguish the case is either the legitimate site is issuing the dummy information as an error or the phishing site is issuing an error to cause the victim to enter inputtable login information many times to steal the login information. Therefore, the phishing site determination unit 14 skips the processing to S57, and the processing for this subdomain is terminated.

In a case where no error information is output (S55: No), it is highly probable that the site is a phishing site in a case where a page does not transition and behaves like in progress, for example. Therefore, in a case where no error information is output (S55: No), the phishing site determination unit 14 outputs "no error for dummy login attempt" to the unidentified phishing site URL data 32 related to the selected candidate unidentified subdomain (S56).

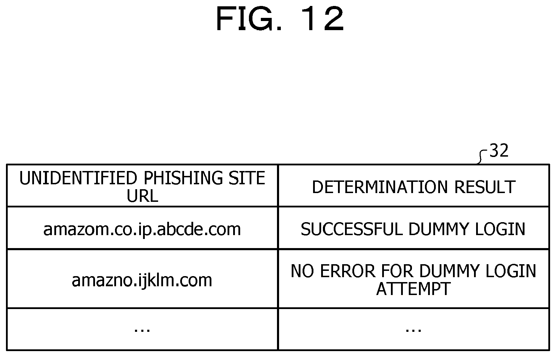

FIG. 12 is an explanatory table for describing an example of the new subdomain extraction unit 12. As illustrated in FIG. 12, the new subdomain extraction unit 12 outputs "successful dummy login", which indicates that the dummy login has been successful, to the determination result 32, for "amazom.co.ip.abcde.com". Furthermore, for "amazno.ijklm.com", "no error for dummy login attempt", which indicates that the dummy login has been unsuccessful but no error has been output, is output to the determination result 32.

Next, the phishing site determination unit 14 determines whether there is an unselected candidate unidentified subdomain (S57), and returns the processing to S50 in a case where there is an unselected candidate unidentified subdomain (S57: Yes). In a case where there is no unselected candidate unidentified subdomain (S57: No), the phishing site determination unit 14 terminates the processing. In this way, the phishing site determination unit 14 repeats the series of processing (S50 to S57) until there are no more unselected candidate unidentified subdomains.

As described above, the information processing device 1 generates the anomalous character string data 22 of an anomalous character string similar to a predetermined domain name (for example, the legitimate TLD 20). Next, the information processing device 1 detects a response indicating association between an address and the domain information whose subdomain is the anomalous character string included in the anomalous character string data 22 based on the response history information indicating association between the domain information and the address by a management server that manages domain information, and outputs the detection result as the most recent response subdomain data 26.

Therefore, the information processing device 1 can detect the domain information that uses (abuses) the subdomain part (the domain part other than the TLD) such as an anomalous top-level domain, and can improve detection accuracy of the domain targeted for abuse.

Furthermore, the information processing device 1 generates a plurality of anomalous character strings by executing a plurality of replacement patterns, such as replacing one or more characters contained in a predetermined domain name with one or a plurality of other characters, or removing one or a plurality of characters contained in the predetermined domain name. Therefore, the information processing device 1 can cope with cases where an anomalous top-level domain whose TLD is modified in various patterns is abused as a subdomain part.

Furthermore, the information processing device 1 acquires the history information from the passive DNS 25 that monitors communication of the management server and collects the response history indicating association between domain information and addresses. Therefore, the information processing device 1 can easily acquire the response history indicating association between domain information and addresses from the management server that manages domain information.

Furthermore, the information processing device 1 determines the presence or absence of unauthorized use of the domain information based on whether the domain information included in the detected response is included in the threat information related to cyberattacks by reference to the threat information DB 29. Thereby, a user of the information processing device 1 can easily know whether the domain targeted for abuse is actually abused.

Furthermore, the information processing device 1 executes login with the dummy information to the access destination based on the domain information determined to be free of unauthorized use, and outputs whether or not the login is possible as the unidentified phishing site URL data 32. Therefore, the user of the information processing device 1 can detect a phishing site before a report of unauthorized use is issued such as the site being ready and an email for a phishing attack being sent, in other words, a phishing site before the site is shared as the threat information.

Furthermore, the information processing device 1 extracts a response indicating association between an address and domain information different from the domain information associated with the address from the history information of the passive DNS 25 based on the address included in the most recent response subdomain data 26, and outputs the extraction result as the most recent response new subdomain data 28. Therefore, the information processing device 1 can detect a series of phishing attacks in which the IP address of the domain information targeted for abuse is associated with the anomalous subdomain imitating a new phishing target. Therefore, the user of the information processing device 1 can easily deal with the operation of a phishing site that uses a specific IP address for several purposes.

Note that each of the illustrated components in each of the devices does not necessarily have to be physically configured as illustrated in the drawings. In other words, specific modes of distribution and integration of the devices are not limited to those illustrated, and all or a part of the respective devices may be configured by being functionally or physically distributed and integrated in an optional unit depending on various loads, use situations, and the like.

Furthermore, all or an optional part of the various processing functions of the anomalous character string generation unit 10, the most recent response detection unit 11, the new subdomain extraction unit 12, the malignancy determination unit 13, and the phishing site determination unit 14 of the information processing device 1 may be executed on a central processing unit (CPU) (or a microcomputer such as a micro processing unit (MPU) or a micro controller unit (MCU)). Furthermore, it is needless to say that all or an optional part of various processing functions may be executed on a program analyzed and executed by a CPU (or microcomputer such as an MPU or an MCU) or on hardware by wired logic. Furthermore, various processing functions performed by the information processing device 1 may be executed by a plurality of computers in cooperation through cloud computing.

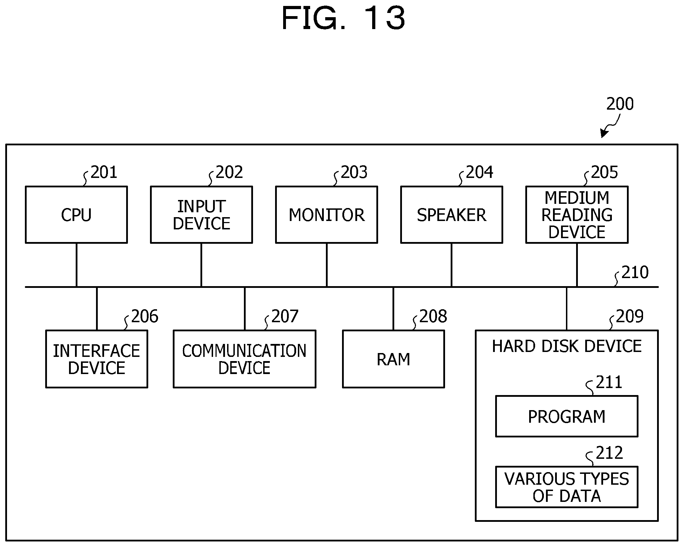

Meanwhile, various types of processing described in the embodiments described above may be implemented by executing a program prepared beforehand on a computer. Thus, hereinafter, an example of a computer configuration (hardware) that executes a program having functions similar to the functions of the embodiments described above will be described. FIG. 13 is an explanatory diagram for describing an example of the computer configuration.

As illustrated in FIG. 13, a computer 200 includes a CPU 201 that executes various kinds of arithmetic processing, an input device 202 that receives data input, a monitor 203, and a speaker 204. Furthermore, the computer 200 includes a medium reading device 205 that reads a program or the like from a storage medium, an interface device 206 to be connected to various devices, and a communication device 207 to be connected to and communicate with an external device in a wired or wireless manner. Furthermore, the information processing device 1 includes a random-access memory (RAM) 208 that temporarily stores various types of information, and a hard disk device 209. Furthermore, each of the units (201 to 209) in the computer 200 is connected to a bus 210.

The hard disk device 209 stores a program 211 for executing various types of processing in the functional configurations (for example, the anomalous character string generation unit 10, the most recent response detection unit 11, the new subdomain extraction unit 12, the malignancy determination unit 13, and the phishing site determination unit 14) described in the above embodiment. In other words, the program 211 is an example of a domain search program. Furthermore, the hard disk device 209 stores various types of data 212 that the program 211 refers to. The input device 202 receives, for example, an input of operation information from an operator. The monitor 203 displays, for example, various screens operated by the operator. The interface device 206 is connected to, for example, a printing device or the like. The communication device 207 is connected to a communication network such as a local area network (LAN), and exchanges various types of information with an external device via the communication network.

The CPU 201 reads the program 211 stored in the hard disk device 209 and develops and executes the program in the RAM 208 to perform various types of processing regarding the above-described functional configurations (for example, the anomalous character string generation unit 10, the most recent response detection unit 11, the new subdomain extraction unit 12, the malignancy determination unit 13, and the phishing site determination unit 14). Note that the program 211 does not have to be stored in the hard disk device 209. For example, the program 211 stored in a storage medium readable by the computer 200 may be read and executed. For example, the storage medium readable by the computer 200 corresponds to a portable recording medium such as a compact disc read-only memory (CD-ROM), a digital versatile disc (DVD), or a universal serial bus (USB) memory, a semiconductor memory such as a flash memory, a hard disk drive, or the like. In addition, this program 211 may be prestored in a device connected to a public line, the Internet, a LAN, or the like, and the computer 200 may read the program 211 from this device and execute the program 211.

## Claims

1. A domain detection program comprising instructions which, when executed by a computer, cause the computer to execute processing comprising:
generating an anomalous character string similar to a predetermined domain name; and
detecting a response that indicates association between domain information whose subdomain is the generated anomalous character string and an address based on response history information that indicates association between domain information and an address by a management server that manages the domain information.

2. The domain detection program according to claim 1, wherein
the generating includes generating a plurality of the anomalous character strings by executing a plurality of replacement patterns in which one or more characters contained in the domain name are replaced with one or a plurality of other characters, or one or a plurality of characters contained in the domain name is removed.

3. The domain detection program according to claim 1, wherein
the detecting includes acquiring the history information from a collection server that monitors communication of the management server and collects the response history that indicates association between the domain information and addresses.

4. The domain detection program according to claim 1, the processing further comprising:
determining presence or absence of unauthorized use of domain information included in the detected response based on whether the domain information is included in threat information related to a cyberattack.

5. The domain detection program according to claim 4, the processing further comprising:
executing login with dummy information to an access destination based on the domain information determined to be free of unauthorized use, and outputting whether the login is possible.

6. The domain detection program according to claim 1, the processing further comprising:
extracting, based on the address included in the detected response, a response that indicates association between domain information different from the domain information associated with the address, and the address, from the history information.

7. A domain detection method implemented by a computer, the domain detection method comprising:
generating an anomalous character string similar to a predetermined domain name; and
detecting a response that indicates association between domain information whose subdomain is the generated anomalous character string and an address based on response history information that indicates association between domain information and an address by a management server that manages the domain information.

8. An information processing apparatus comprising a control unit that performs processing including:
generating an anomalous character string similar to a predetermined domain name; and
detecting a response that indicates association between domain information whose subdomain is the generated anomalous character string and an address based on response history information that indicates association between domain information and an address by a management server that manages the domain information.
